# DEMANDE DE BREVET EUROPEEN

(11) **EP 0 662 618 A1**
(43) Date de publication de la demande: **12.07.1995**
(21) Numéro de dépôt: 94400053.8
(22) Date de dépôt: 10.01.1994
(51) Int. Cl.: G01S 17/74

(54) **Procédé et dispositif de localisation d'un objet mobile dans un environnement**

(71) Demandeur: CHARLATTE, F-89400 Migennes (FR)
(72) Inventeur: Pegard, Claude, F-80480 Pont de Metz (FR); Brassart, Eric, F-80450 Camon (FR); Detaille, Pierre, F-80450 Camon (FR)
(74) Mandataire: Casalonga, Axel

(57) **Abrégé**

Le procédé de localisation d'un objet mobile (1) dans un environnement consiste à
- installer dans l'environnement une pluralité de balises codées individuellement (4) de façon à ce qu'à chaque instant au plus une seule d'entre elles se trouve dans le champ d'observation (6) de l'objet mobile,
- envoyer un signal d'allumage (SA) de balise depuis l'objet mobile vers l'environnement pour déclencher l'émission du code d'identification (CI) de la balise (4) se trouvant dans le champ d'observation de l'objet mobile,
- effectuer une acquisition de l'image instantanée de ladite balise après réception de son code d'identification par l'objet mobile, et
- comparer l'image instantanée de la balise avec les coordonnées mémorisées de celle-ci dans l'objet mobile afin de déterminer la position et l'orientation de l'objet mobile dans l'environnement.

Application : localisation absolue de véhicules sans pilote dans un atelier de stockage de marchandise.

## Description

La présente invention concerne un procédé de localisation d'un objet mobile, tel qu'un véhicule sans conducteur ou un robot, évoluant dans un environnement, notamment dans un espace couvert par un toit (hangar, bâtiment ou autres). L'invention concerne également un dispositif permettant de fournir la localisation instantanée de l'objet mobile dans l'environnement.

Les progrès technologiques ont permis de construire des machines autonomes, plus connues sous le nom de robots, capables d'exécuter un certain nombre d'opérations selon des modes préétablis. Les robots peuvent être fixés à un endroit précis, par exemple le long d'une chaîne de montage de véhicules automobiles, ou être mobiles pour pouvoir évoluer entre les différents postes de travail.

Lorsqu'un robot mobile ou un véhicule sans pilote se déplace, il est nécessaire qu'il puisse déterminer sa position par rapport à son environnement.

Il existe une technique dite d'intégration de la trajectoire pour localiser le robot par rapport à l'environnement. Cette technique consiste à mémoriser la trajectoire du robot, à donner une estimation de la position du robot au moyen des capteurs intégrés qui fournissent des informations propres au robot indépendamment de l'environnement et, à comparer ces informations avec les données mémorisées de la trajectoire pour déterminer la position du robot sur la trajectoire. Une telle technique n'est envisageable que pour des trajectoires très courtes du robot, car le déplacement du robot dans la pratique ne correspond pas exactement à son déplacement théorique et entraîne de ce fait des dérives inévitables par rapport à la trajectoire théorique mémorisée. Lorsque la trajectoire est longue, de telles dérives peuvent fausser complètement la position du robot.

Cette technique d'intégration de trajectoire est améliorée par l'adjonction d'une caméra au robot permettant un repérage optique du robot par rapport à l'environnement afin de rectifier la trajectoire du robot par des corrections régulières de sa position. Ainsi le robot peut suivre plus précisément la trajectoire théorique mémorisée. Le repérage optique est effectué par la technique de la vision dynamique ou stéréovision selon laquelle la caméra enregistre les images de l'environnement et repère des éléments singuliers de cet environnement (tels que portes, bureaux, angles, lampes, affiches, objets de formes particulières). Un traitement informatique d'image permet d'extraire à partir des images des éléments singuliers les paramètres de position du robot dans l'environnement.

Cependant, le repérage optique des éléments singuliers de l'environnement n'est pas toujours possible car il se peut que certains éléments singuliers dans l'environnement peuvent avoir la même configuration et même géométrie pour fausser l'information sur la position effective du robot dans l'environnement. En outre, le repérage optique peut également être faussé par la présence temporaire d'objets inconnus au robot, la suppression temporaire d'un élément singulier de l'environnement mémorisé ou autres sources de perturbation. Enfin, un traitement informatique d'image relativement lourd est nécessaire pour effectuer l'extraction de contours des éléments singuliers de l'environnement et pour rectifier les dérives de la trajectoire du robot.

La présente invention a pour objet de remédier aux inconvénients des techniques classiques en proposant un procédé et un dispositif simples, fiables permettant de localiser de façon précise et en temps réel un objet mobile dans un environnement.

L'invention a également pour objet un procédé et un dispositif permettant de déterminer la position et l'orientation de l'objet mobile dans un repère lié à l'environnement.

Selon l'invention, le procédé de localisation d'un objet mobile dans un environnement consiste à installer dans l'environnement une pluralité de balises codées de façon à ce qu'à chaque instant au plus une seule d'entre elles se trouve dans le champ d'observation de l'objet mobile, à envoyer un signal d'allumage de balise depuis l'objet mobile vers l'environnement pour déclencher l'émission du code d'identification de la balise se trouvant dans le champ d'observation de l'objet mobile, à effectuer une acquisition de l'image instantanée de ladite balise après réception de son code d'identification par l'objet mobile, et à comparer l'image instantanée de la balise avec les coordonnées mémorisées de celle-ci dans l'objet mobile afin de déterminer sa position et son orientation dans l'environnement.

Le dispositif de localisation d'un objet mobile dans un environnement selon l'invention comprend des balises actives codées individuellement qui seront installées dans l'environnement pour constituer un repère pour l'objet mobile, et une partie embarquée sur l'objet mobile comprenant un moyen d'émission d'un signal d'allumage de balise, un moyen de réception des codes d'identification émis par les balises, un moyen d'acquisition d'image et un moyen de traitement d'informations permettant de fournir la position et l'orientation de l'objet mobile dans l'environnement.

L'émission et la réception des signaux entre l'objet mobile et l'environnement sont effectuées par des rayons électromagnétiques dans des spectres de fréquence prédéterminés. De manière simple, on peut utiliser le spectre des rayons infrarouges pour ne pas gêner la présence des opérateurs dans l'environnement.

Parmi de nombreuses applications possibles de l'invention, on peut citer la commande de déplacements précis des robots entre différents postes de travail plus ou moins éloignés les uns des autres, et la circulation précise des véhicules sans pilote dans des ateliers de stockage de marchandise.

Bien entendu, une pluralité d'objets mobiles peuvent évoluer en même temps dans un même environnement de façon indépendante les uns des autres selon l'invention.

L'invention sera mieux comprise à l'étude de la description détaillée d'un mode de réalisation pris à titre d'exemple nullement limitatif et illustré par les dessins annexés, sur lesquels :
la figure 1 est une vue schématique expliquant le principe de l'invention appliqué à un véhicule sans pilote,
les figures 2a et 2b sont des schémas synoptiques d'une balise et de la partie embarquée sur le véhicule respectivement,
la figure 3 est un schéma synoptique du moyen d'émission du signal d'allumage de balise faisant partie de la partie embarquée du dispositif,
la figure 4 est un schéma synoptique du moyen de réception du signal d'allumage associé à chaque balise,
la figure 5 est un schéma synoptique du moyen d'émission de code d'identification de la balise,
la figure 6 est un schéma synoptique du moyen de réception du code d'identification de la partie embarquée du dispositif,
les figures 7 à 10 représentent les courbes d'impulsions au niveau des moyens illustrés sur les figures 3 à 6 respectivement.

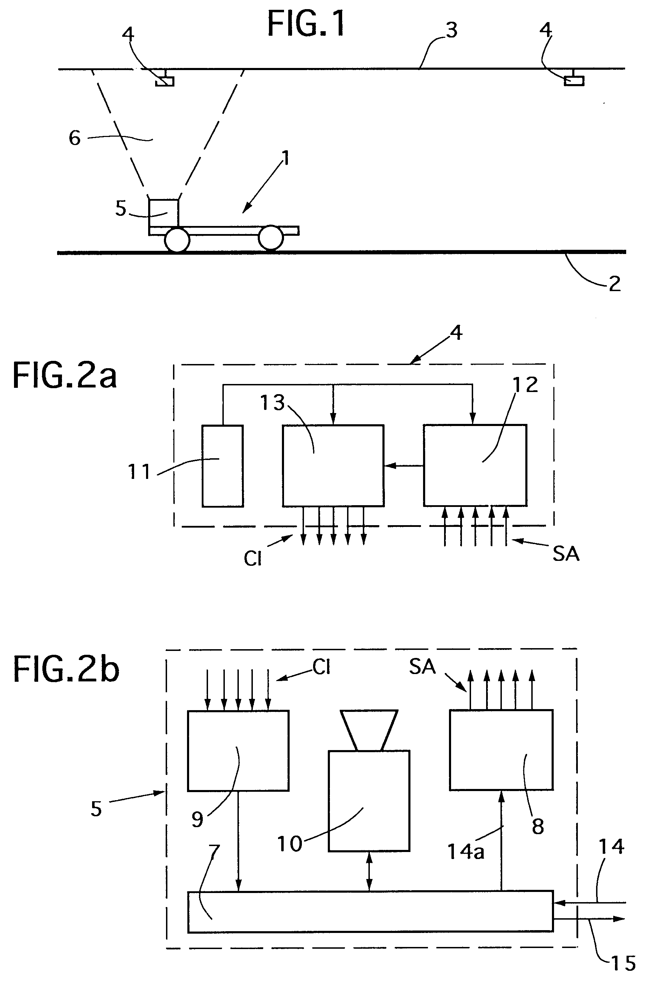

Comme illustré sur les figures 1 et 2, un véhicule sans pilote 1 évolue dans un atelier de stockage de marchandise schématisé par le sol 2 et un plafond 3. Le dispositif de l'invention comprend des balises codées individuellement 4 qui sont installées à une certaine distance les unes des autres sur le plafond 3 de l'atelier le long d'une trajectoire pour le véhicule 1, et une partie embarquée 5 sur le véhicule 1 qui présente un champ d'observation 6 dirigé vers le plafond 3 de l'atelier, la distance séparant deux balises codées 4 consécutives étant telle qu'au plus une seule balise 4 se trouve dans le champ d'observation 6 du véhicule 1, de façon à éviter des interférences entre l'émission et la réception de plusieurs codes d'identification de balise.

La partie embarquée 5 comprend un calculateur 7, un moyen d'émission 8 de signal d'allumage SA de balise, un moyen de réception 9 de code d'identification CI de balise et une caméra matricielle 10.

Chaque balise 4 comprend une alimentation électrique 11 qui peut être un accumulateur photovoltaïque ou une pile électrique alimentant un moyen de réception 12 de signal d'allumage SA de balise émis par la partie embarquée 5 du dispositif, et un moyen d'émission 13 de code d'identification CI de la balise.

La partie embarquée 5 du dispositif reçoit un signal de commande 14 provenant d'une unité de commande non représentée du véhicule. Le calculateur 7 interprète le signal de commande 14 et envoie ses instructions d'allumage 14a au moyen d'émission 8 qui envoie alors un signal d'allumage SA vers l'environnement. La balise 4 qui reçoit le signal d'allumage SA par son moyen de réception 12 et son code d'identification CI vers le véhicule par son moyen d'émission 13. Le code d'identification CI de la balise 4 est reçu par le moyen de réception 9 et transnus au calculateur 7 qui donne une instruction à la caméra matricielle 10 pour effectuer une acquisition de l'image de son champ d'observation 6. La balise 4 se trouvant dans le champ d'observation 6 fait partie de l'image acquise par la caméra 10. Le calculateur 7 compare cette image avec une table préenregistrée et mémorisée des balises de façon à déterminer la position et l'orientation instantanées du véhicule 1 dans l'environnement. Le signal 15 qui en résulte est fourni à l'unité de commande non représentée laquelle se charge de modifier éventuellement la trajectoire réelle du véhicule 1 dans l'environnement.

Le véhicule 1 évoluant dans l'environnement peut envoyer le signal d'allumage de balise SA en continu, ou à des instants précis notamment pour des opérations de localisation planifiées ou d'accostage du véhicule. Pour le véhicule 1 l'environnement est remplacé par un repère constitué de balises 4 à émission d'impulsions codées CI.

Le traitement par le calculateur 7 d'une part des codes d'identification CI des balises 4 et d'autre part des images desdites balises obtenues par la caméra matricielle 10 permet de fournir simultanément le positionnement instantané du véhicule 1 par rapport au repère de l'environnement par l'identification de la balise codée concernée, et la position et l'orientation du véhicule 1 par rapport à ladite balise codée dans l'environnement.

De préférence, les codes d'identification CI des balises sont numérisés en codes binaires. Ainsi un grand nombre de balises peuvent être implantées dans un environnement (par exemple pour un mot de 16 bits, il est possible de codifier 65 535 balises individuelles). Lorsque la trajectoire du véhicule 1 doit être suivie avec une grande précision, il est possible d'implanter un grand nombre de balises 4 dans l'environnement de manière a assurer une localisation à tout instant du véhicule. Sinon, il est possible d'implanter des balises 4 uniquement aux passages difficiles ou sur des zones d'accostage du véhicule. Grâce à l'invention, on peut obtenir une précision de localisation absolue du véhicule de l'ordre de 1 cm en position et 1 degré en orientation.

L'invention permet de réaliser des balises actives dont la géométrie est constante, ce qui est avantageux par rapport à la méthode classique de repérage de singularités dans l'environnement (méthode d'extraction de contour). En effet, l'identification des balises est effectuée selon l'invention par des codes individuels en binaire associés à chaque balise. De plus, l'émission directe des codes d'identification par des balises dans le spectre des rayonnements infrarouges permet de rendre la localisation du véhicule 1 pratiquement insensible aux variations d'éclairage ambiant, la localisation pouvant d'ailleurs être effectuée dans un local non éclairé. En outre, l'invention permet d'effectuer la localisation du véhicule à une fréquence de l'ordre de (30 Hertz) choisie comme fréquence d'acquisition des images par la caméra matricielle 10, de façon à permettre une grande vitesse de déplacement du véhicule dans l'environnement.

Grâce à l'invention, on peut effectuer la localisation en parallèle de plusieurs objets mobiles dans un environnement grâce à l'utilisation des balises codées. La localisation est absolue par rapport à l'environnement et en temps réel, et est peu sensible aux perturbations extérieures. La mise en oeuvre de l'invention dans l'infrastructure déjà existante est très simple, car il suffit d'installer des balises codées 4 selon des positions prédéterminées dans l'environnement et d'installer la partie embarquée 5 sur les objets mobiles.

On va expliquer plus en détail le fonctionnement du dispositif selon un mode de réalisation de l'invention.

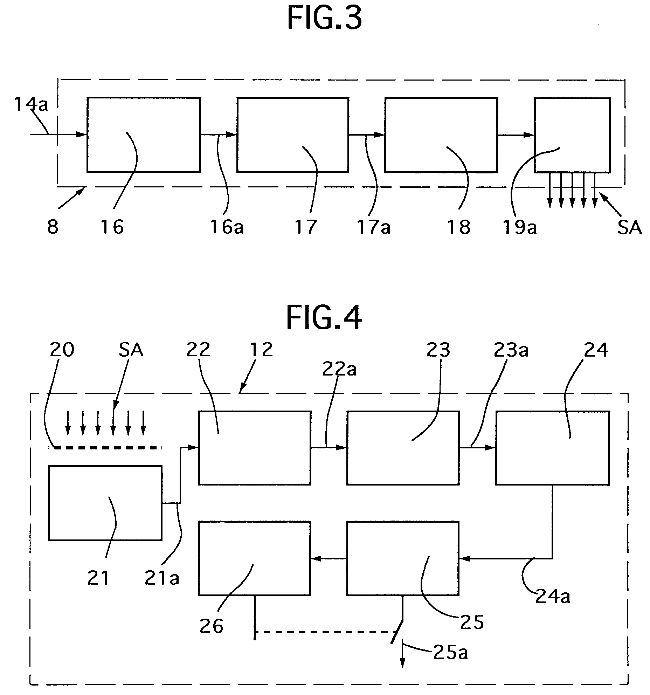

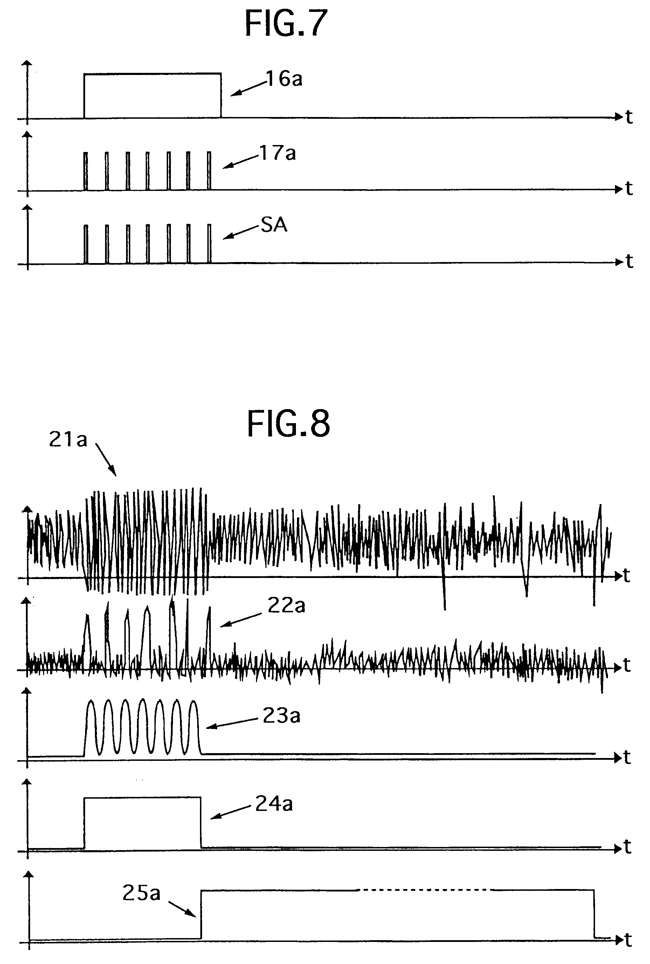

Les figures 3 et 7 illustrent le fonctionnement du moyen d'émission 8 du signal d'allumage SA de balise. Le calculateur 7 envoie une commande de déclenchement 14a à un adaptateur de niveau 16 du moyen d'émission 8. Le signal 16a issu de l'adaptateur de niveau 16 est un niveau électrique positif qui valide des cycles d'une horloge 17 à créneaux rectangulaires 17a dont la fréquence est préréglée de façon précise. On peut par exemple choisir une période de 3 ms et une durée d'impulsions de 50 µs pour le signal 17a. Ainsi, il est possible d'éliminer les perturbations extérieures (par exemple éclairement par néons, par halogènes, par lampes incandescentes) qui ont des fréquences différentes. Le signal 17a issu de l'horloge 17 est ensuite amplifié et ajusté par un amplificateur de puissance 18 dont la sortie est reliée à au moins une diode électroluminescente 19 (connue sous le nom de LED) afin d'obtenir son rendement lumineux maximum.

Le signal d'allumage SA de balise issu du ou des LED(s) 19 a une fréquence prédéterminée conditionnée par l'horloge 17. Lorsque le signal de déclenchement 14a revient au niveau 0, l'horloge 17 est invalidée et l'émission lumineuse SA des LEDs 19 s'arrête. Le temps nécessaire à la demande d'allumage des balises SA s'ajuste par traitement informatique commandé par le calculateur 7 de la partie embarquée 5 du dispositif.

Les figures 4 et 8 représentent le fonctionnement du moyen de réception 12 dans la balise 4. Le signal d'allumage SA de balise envoyé par le moyen d'émission 8 de la partie embarquée 5 (figures 3 et 7) arrive au moyen de réception 12 de la balise 4. Un premier filtrage du signal SA est effectué par un filtre optique infrarouge 20 avant la réception effective de ce signal d'allumage SA par un récepteur infrarouge 21. Le filtre optique 20 permet d'éliminer des rayonnements situés en dehors du spectre infrarouge, mais laisse passer les rayonnements infrarouges provenant d'autres sources lumineuses (néons, sources de chaleur, lampes à incandescence ou lampes halogènes). Le signal 21a issu du récepteur 21 est introduit dans un filtre amplificateur 22 qui effectue un premier filtrage électrique et une amplification à gain très élevé pour récupérer des signaux utiles. Le signal 22a issu du filtre amplificateur 22 est ensuite introduit dans un filtre sélectif 23 qui élimine les perturbations provenant des sources étrangères. Le signal 23a issu du filtre sélectif est alors mis à niveau par un intégrateur 24 qui délivre un signal de déclenchement 24a à un déclencheur 25 lequel autorise alors l'émission du code d'identification de la balise selon le signal de déclenchement 25a dont la durée est fixée par un temporisateur 26.

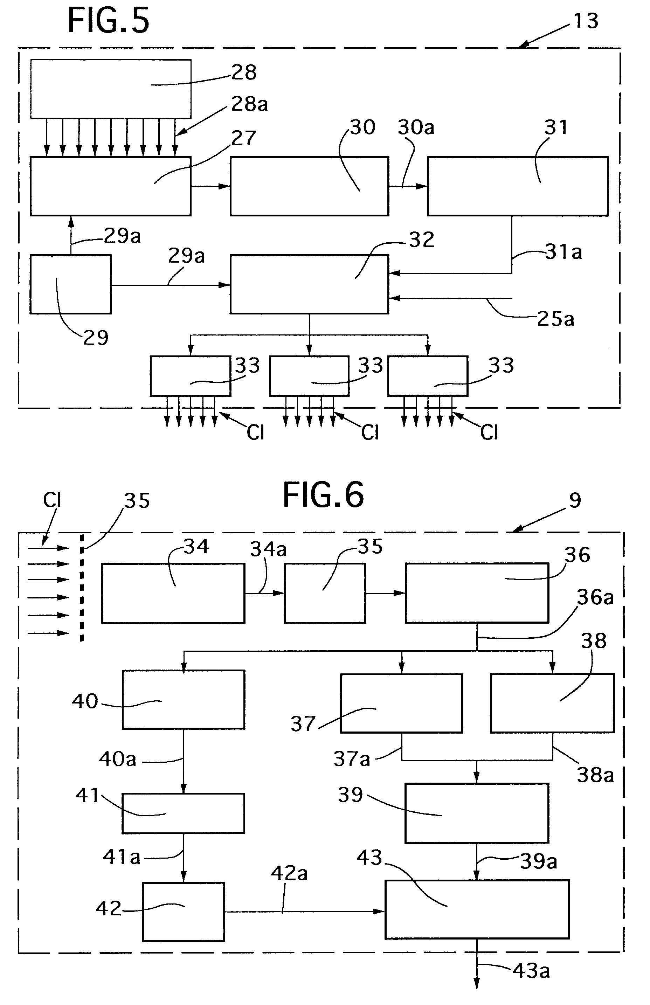

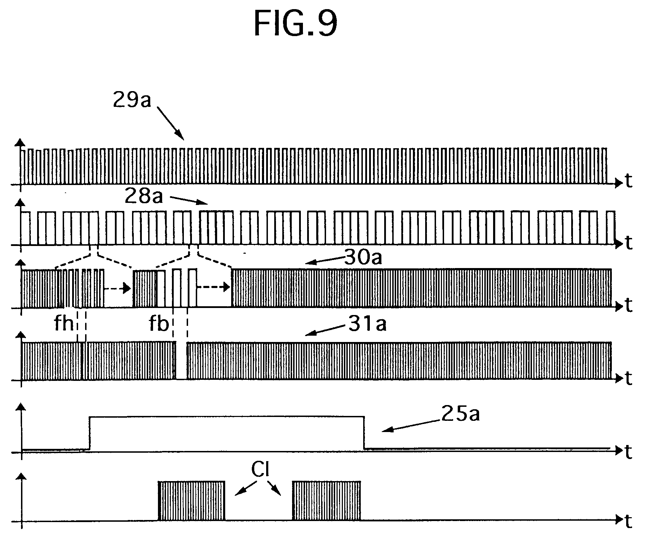

L'émission du code d'identification de la balise est effectuée par le moyen d'émission 13 de la balise dont le fonctionnement est décrit en se référant aux figures 5 et 9. Le moyen d'émission 13 du code d'identification CI de la balise comprend un identificateur 27 qui permet de délivrer un codage binaire. Le codage peut être modifié au moyen d'un ensemble d'interrupteurs 28 par l'installateur. Les données du codage 28a délivrées par l'ensemble d'interrupteurs 28 vers l'identificateur 27 sont superposées à un signal 29a délivré par une horloge 29 pour être fournies à un modulateur FSK (Frequency Shift Keying) 30. Le modulateur 30 permet de transmettre un signal 30a qui est composé d'un signal à une fréquence fh pour un niveau logique 1 du code de la balise et un signal à une fréquence fb pour un niveau logique 0 du code. Le modulateur 30 effectue une transformation tension/fréquence avec un rapport cyclique de 1/2 par exemple. Le signal 30a issu du modulateur 30 est introduit à un adaptateur 31 qui effectue un réglage des impulsions afin d'obtenir un rapport cyclique faible pour permettre une efficacité maximum dans l'émission lumineuse. Le signal 31a issu de l'adaptateur 31 est superposé au signal 25a de déclenchement issu du moyen récepteur 12 de la balise pour être introduit dans un amplificateur 32. L'horloge 29 intégrée permet à la fois la mise en série des codes et l'autorisation de la commande 25a des LEDs 33 pour laisser entre deux émissions successives un temps de séparation.

Les LEDs 33 ou les électrodes électroluminescentes faisant partie du moyen d'émission 13 sont au nombre de trois pour chaque balise afin de permettre une localisation précise en distance et en angle du véhicule 1 par rapport à la balise observée.

Le code d'identification CI de la balise 4 émis par les LEDs 33 du moyen d'émission 13 est reçu et traité par le moyen de réception 9 de la partie embarquée 5 du dispositif avant d'être fourni au calculateur 7.

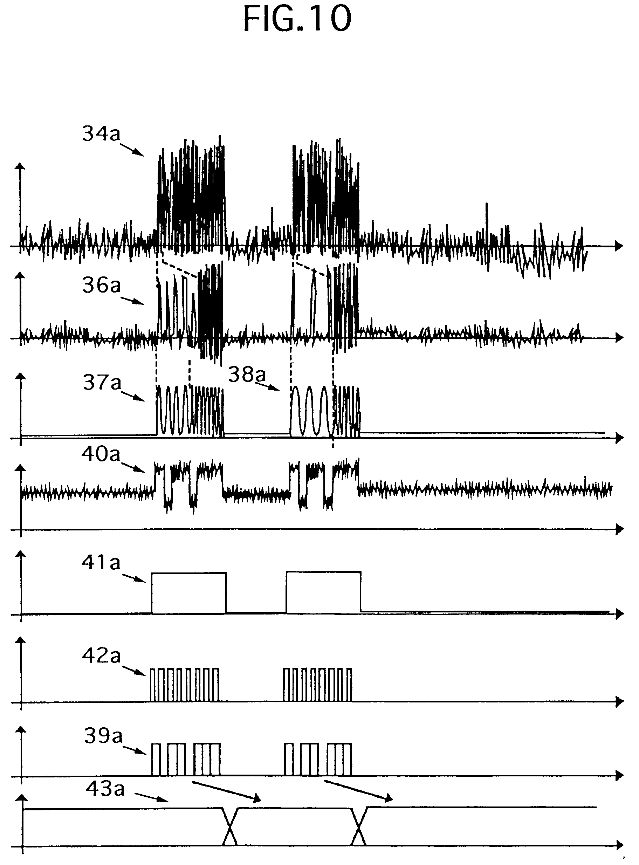

Comme illustré sur les figures 6 et 10, le code d'identification CI arrive dans le récepteur infrarouge 34 du moyen de réception 9 après avoir traversé un filtre optique 35 du type passe-bande qui ne laisse passer que les rayons lumineux dans le spectre des infrarouges y compris les parasites provenant des diverses sources ambiantes. Le signal 34a issu du récepteur infrarouge 34 passe d'abord dans un filtre 35' et ensuite dans un amplificateur 36. Le signal 36a issu de l'amplificateur 36 alimente deux filtres sélectifs 37, 38 mis en parallèle et de fréquences centrales fb et fh respectivement qui permettent le passage uniquement du premier harmonique du code d'identification CI de la balise concernée. Les signaux 37a et 38a issus respectivement des filtres sélectifs 37 et 38 sont ensuite introduits à un décodeur FSK (Frequency Shift Keying) 39. Le signal 36a issu de l'amplificateur 36 alimente également en parallèle un détecteur de modulation 40 dont le signal de sortie 40a est introduit dans un intégrateur 41 pour générer un signal de commande 41a. Une horloge 42 délivre des impulsions 42a de fréquence déterminée pour coder le signal de commande 41a. Les signaux 39a issus du décodeur FSK 39 et le signal 42a issu de l'horloge 42 sont introduits en parallèle dans un module 43 qui fournit un signal 43a représentatif du code d'identification CI reçu de la balise au calculateur 7 de la partie embarquée 5 du dispositif.

Le calculateur 7 demande alors à la caméra matricielle 10 une acquisition d'image instantanée dans son champ d'observation 6 qui de préférence coïncide avec le champ réception du moyen de réception 9 de la partie embarquée du dispositif. La balise 4 ayant émis le code d'identification figure dans l'image acquise par la caméra matricielle 10 et le calculateur 7 traite les informations reçues grâce à une table préenregistrée d'association des codes CI de balise par rapport à la position des balises 4 dans l'environnement, et calcule également l'orientation du véhicule 1 par rapport à la balise grâce aux trois LEDs 33 de la balise 4 concernée. Une fois le traitement d'informations terminé, la partie embarquée 5 du dispositif envoie un signal 15 de localisation absolue momentanée du véhicule 1 à l'unité de commande non représentée du véhicule. Cette unité de commande peut alors modifier la position et/ou la trajectoire du véhicule 1 en fonction du signal 15 fourni par le dispositif de l'invention.

## Revendications

1. Procédé de localisation d'un objet mobile (1) dans un environnement, caractérisé en ce qu'il consiste à
- installer dans l'environnement une pluralité de balises codées individuellement (4) de façon à ce qu'à chaque instant au plus une seule d'entre elles se trouve dans le champ d'observation (6) de l'objet mobile,
- envoyer un signal d'allumage (SA) de balise depuis l'objet mobile vers l'environnement pour déclencher l'émission du code d'identification (CI) de la balise (4) se trouvant dans le champ d'observation de l'objet mobile,
- effectuer une acquisition de l'image instantanée de ladite balise après réception de son code d'identification par l'objet mobile, et
- comparer l'image instantanée de la balise avec les coordonnées mémorisées de celle-ci dans l'objet mobile afin de déterminer la position et l'orientation de l'objet mobile dans l'environnement.

2. Procédé de localisation selon la revendication 1, caractérisé en ce que l'émission et la réception du signal d'allumage (SA) et des codes d'identification (CI) sont effectuées dans le spectre des rayonnements infrarouges.

3. Procédé de localisation selon la revendication 1 ou 2, caractérisé en ce qu'il consiste à utiliser le même champ d'observation (6) de l'objet mobile pour la réception des codes d'identification (CI) des balises (4) et pour l'acquisition des images des balises.

4. Dispositif de localisation d'un objet mobile (1) dans un environnement, caractérisé en ce qu'il comprend des balises (4) installées à des endroits prédéterminés de l'environnement et capables d'émettre son code d'identification individuel (CI) au moyen des rayons électromagnétiques, et une partie embarquée (5) sur l'objet mobile comportant un calculateur (7), un moyen d'émission (8) d'un signal d'allumage de balise (SA) vers l'environnement, un moyen de réception (9) des codes d'identification (CI) des balises et une caméra matricielle (10) permettant d'effectuer des acquisitions de l'image instantanée d'une balise après réception de son code d'identification, la partie embarquée permettant de déterminer la localisation absolue instantanée de l'objet mobile en temps réel selon le code d'identification (CI) de la balise (4) reçu et l'image de la balise obtenue par la caméra matricielle.

5. Dispositif selon la revendication 4, caractérisé en ce que le calculateur (7) comprend une table préenregistrée de la position des balises codées (4) dans l'environnement et effectue une comparaison entre cette table préenregistrée et les informations reçues du moyen de réception (9) et de la caméra matricielle (10) pour fournir la position et l'orientation du véhicule (1) dans l'environnement.

6. Dispositif selon la revendication 4 ou 5, caractérisé en ce que chaque balise (4) comprend une alimentation électrique autonome (11), un moyen de réception (12) du signal d'allumage (SA) de balise et un moyen d'émission (13) de son code d'identification (CI), et que le moyen de réception (12) comprend des filtres (22, 23) pour délivrer un signal de commande de déclenchement (25a) de l'émission du code d'identification au moyen d'émission (13).

7. Dispositif selon la revendication 6, caractérisé en ce que le moyen récepteur (12) comprend un temporisateur (26) limitant la durée du signal de commande de déclenchement (25a) de l'émission du code d'identification.

8. Dispositif selon la revendication 6 ou 7, caractérisé en ce que le moyen d'émission (13) du code d'identification (CI) de balise comprend un identificateur (27) dont le codage peut être modifié à l'aide d'un ensemble d'interrupteurs (28), et trois diodes électroluminescentes indépendantes (33) comme moyens d'émission du code d'identification.

9. Dispositif selon la revendication 8, caractérisé en ce que le codage issu de l'identificateur (27) subit une transformation fréquence/tension au moyen d'un modulateur (30) avant d'être émis par les diodes électroluminescente (33).

10. Dispositif selon l'une des revendications 4 à 9, caractérisé en ce que le moyen de réception (9) des codes d'identificafion (CI) de balise comprend des moyens de détection de modulation (40), des filtres sélectifs (37, 38) et un décodeur de modulation (39), de façon à permettre la reconnaissance certaine des codes d'identification reçus par le calculateur (7).
